# EUROPEAN PATENT APPLICATION

(11) **EP 3 965 033 A1**
(43) Date of publication of application: **09.03.2022**
(21) Application number: 20194695.1
(22) Date of filing: 04.09.2020
(51) Int. Cl.: G06Q 10/06

(54) **METHOD AND DEVICE FOR GENERATING LOGISTICS CONFIGURATIONS FOR A PRODUCTION FACILITY**

(71) Applicant: Siemens Aktiengesellschaft, 80333 München (DE); Robert Bosch GmbH, 70839 Gerlingen-Schillerhöhe (DE)
(72) Inventor: Höfig, Kai, 83101 Rohrdorf (DE); Koo, Chee-Hung, 70439 Stuttgart (DE); Rothbauer, Stefan, 86156 Augsburg (DE); Schröck, Sebastian, 71263 Weil der Stadt (DE); Vorderer, Marian Marcel, 71277 Rutesheim (DE); Zeller, Marc, 81243 München (DE)
(74) Representative: Maier, Daniel Oliver

(57) **Abstract**

The invention provides to a computer-implemented method for generating at least one logistics configuration for a production facility. The logistics configuration for the production facility determines flow of materials and/or products within the production facility. At least one key performance indicator, KPI, is received that describes production goals of the production facility. A generative design algorithm generates at least one possible logistics configuration for the production facility, starting from an initial logistics configuration for the production facility. The generative design algorithm includes an optimization method that is based on the received at least one KPI. An output is generated based on the at least one generated possible logistics configuration for the production facility.

## Description

The invention relates to a computer-implemented method for generating at least one logistics configuration for a production facility. The invention further relates to a device for generating at least one logistics configuration for a production facility.

### State of the Art

Modern production facilities comprising a large number of components working together. Materials or products are transported between different locations of the production facilities. It is important to provide an efficient flow of materials and products. Materials must be provided in sufficient amount and at the required time for further processing. The end products must be provided in time for delivery to further facilities or to the end consumer.

Accordingly, finding good logistics configurations for production facilities is of utmost importance.

However, because of the increasing number of components and the increasing amount of products and materials to be processed, it becomes more complex and difficult to find reasonable solutions for the transportation and logistics of material and product flow within the production facility.

It is even harder to find a good or even optimal configuration for the logistic system of the production facility in order to achieve predetermined goals. Predetermined goals may for example comprise transport velocity, throughput, cost of individual products, number of units handled, costs for the production facility as a whole, energy efficiency of the whole production facility or robustness of production in the presence of individual equipment failures (such as failure of an individual logistics element, as a conveyor or a transportation robot).

Currently, the design of many production facilities that produce high numbers of goods of the same type is rather static and is not dynamically adjusted. A configuration is determined initially, e.g. based on operator experience. however, finding good solutions to a multi-parameter optimization problem with increasing complexity lots of knowledge and experience and will no longer be feasible after a certain point.

In addition, in future production settings production orders are more volatile and customization of individual goods will be more common. For instance, lot-size-one production relates to the concept of providing a single item quantity for each other. The product is adjusted to the specifications of each individual customer. In contrast to mass production of a huge number of items, this approach requires more flexible logistics configurations of the production facility.

Given that the optimal logistics configuration of the production facility will generally differ for each specific case in lot-size-one production processes, it is no longer possible to rely on operator experience with past cases. Also, this approach will likely yield non-optimal solutions as production facilities get larger.

Further, the logistics configuration of the production facility will have to be adjusted in short time and long planning processes are no longer an option. Finally, the cost for planning and reorganizing the logistics configurations must be kept as low as possible to make lot-size-one production processes feasible from an economical point of view.

In view of the above, the traditional approach based on predetermined static logistics configurations will not be possible anymore, as the flexibility provided is not sufficient.

It is therefore an object of the present invention to provide a system and a method for generating logistics configuration for a production facility in a flexible way which is better suited for modern large production facilities.

### Summary of the Invention

This object is solved by a computer-implemented method and a device for generating at least one logistics configuration for a production facility as recited in the independent claims. Advantageous embodiments are set out in the dependent claims.

According to a first aspect, the invention therefore relates to a computer-implemented method for generating at least one logistics configuration for a production facility. The logistics configuration for the production facility determines flow of materials and/or products within the production facility. At least one key performance indicator, KPI, is received that describes production goals of the production facility. A generative design algorithm generates at least one possible logistics configuration for the production facility, starting from an initial logistics configuration for the production facility. The generative design algorithm employs an optimization method that is based on the received at least one KPI. An output is generated based on the at least one generated possible logistics configuration for the production facility.

According to the a aspect, the invention therefore relates to a device for generating at least one logistics configuration for a production facility. The logistics configuration for the production facility determines flow of materials and/or products within the production facility. The device comprises an input interface, a computation unit and an output interface. The input interface receives at least one key performance indicator, KPI, that describes production goals of the production facility. The computation unit generates with a generative design algorithm at least one possible logistics configuration for the production facility, starting from an initial logistics configuration for the production facility. The generative design algorithm comprises an optimization that is based on the received at least one KPI. The output interface outputs the at least one generated possible logistics configuration for the production facility.

In the context of the present invention, a "production facility" comprises a number of logistics components for processing materials and products. The materials may relate to elements or intermediate products in the production process. The products may refer to end products, such as equipment, supplies, food and consumer items.

Herein, "logistics" refers to the management of flows of materials and/or products between different locations. "Logistics components" may comprise robots, conveyor belts, vehicles (such as forklifts), electronic items, sensors, actuators, RFID tags, and the like.

The "logistics configuration" may involve the selection of specific logistics components or specific types of logistics components. Further, the configuration of the logistics components may include specification of sequences of processing steps carried out by the logistics components for handling the materials and/or products. Further examples are the selection of specific operation parameters and control methods of the logistics components. The logistics configuration can relate to flow of information, production, (pre/post-)processing, packaging, inventory, transportation, warehousing, and may also involve security aspects.

"Key performance indicators" may include at least one of:
- a throughput of materials and/or products within the production facility (e.g. including a transport velocity of materials, that is end-to-end time),
- costs of at least one product produced in the production facility,
- total costs of a production process carried out in the production facility,
- a number of materials and/or products handled within the production facility in a given time period, and
- a robustness measure of production in the event of failures of at least one logistics component of the production facility.

The "goals of the production facility" may relate to the production facility from an operator's or owner's point of view. It may also be defined in view of the product, i.e. from a customer's point of view.

A "generative design algorithm" relates to a computer-implemented iterative design process which generates a plurality of outputs (the possible logistics configurations for the production facility). The generative design algorithm may take certain constraints into account. The generative design algorithm may be carried out using machine learning methods, for example a generative adversarial network.

The computer-implemented method and device for generating at least one logistics configuration for the production facility is based on generative design methods to find better solutions for a given logistics problem within an automation production facility. Existing operator experience can be included (e.g. by choosing initial logistics configurations and by adapting the generated possible logistics configurations for the production facility). A large space of possible solutions can be explored. The evaluation with regard to multiple KPIs is possible, so that finding solutions that provide a good balance between individual KPIs is possible.

According to an embodiment of the computer-implemented method for generating at least one logistics configuration for a production facility, the method comprises the step of receiving at least one constraint for the logistics configuration for the production facility, wherein the at least one constraint is taken into account in the step of generating the at least one possible logistics configuration for the production facility.

According to an embodiment of the computer-implemented method for generating at least one logistics configuration for a production facility, the at least one constraint comprises types and/or numbers of logistics components of the production facility. For example, a maximum number of logistics components can be determined to avoid solutions with too many logistics components. Likewise, specific types of the logistics components can be defined, and the solutions are to be found amongst these types of logistics components.

According to an embodiment of the computer-implemented method for generating at least one logistics configuration for a production facility, the generative design algorithm includes a flow-based algorithm, in particular a Ford-Fulkerson algorithm for determining flow rates of materials and/or products within the production facility. The Ford-Fulkerson algorithm determines the optimal flow in a flow network. However, the invention is not restricted to a specific type of algorithm.

According to an embodiment of the computer-implemented method for generating at least one logistics configuration for a production facility, the step of generating the at least one possible logistics configuration involves changing configurations of a transportation system of the production facility. The transportation system may comprise a plurality of devices or entities that are interlinked with each other. The logistics configuration relates to the selection and setup of these entities.

According to an embodiment of the computer-implemented method for generating at least one logistics configuration for a production facility, changing configurations of the transportation system of the production facility includes at least one of
- adding logistics components to the transportation system,
- removing logistics components from the transportation system, and
- changing capacities of logistics components of the transportation system. The method helps to find the optimal number of logistics components for solving specific tasks defined by the KPIs.

According to an embodiment of the computer-implemented method for generating at least one logistics configuration for a production facility, the method further comprises the step of receiving a signal indicating updates of at least one parameter, wherein the at least one parameter comprises at least one of the at least one KPI and the at least one constraint, and wherein the step of generating at least one possible logistics configuration for the production facility is repeated based on the updated parameters. The updates may be provided by a human operator how reviews the solution. The operator may review the most promising solution candidates amongst the provided possible logistics configurations for the production facility and may restart the method with adjusted constraints or KPIs. The operator may also use one of the solutions found as a basis for manual adjustments if required.

According to an embodiment of the computer-implemented method for generating at least one logistics configuration for a production facility, a plurality of KPIs is received. The generative design algorithm comprises an optimization of a utility function that is given by a weighting of the plurality of KPIs. Accordingly, the KPIs can be weighted according to their importance.

According to an embodiment of the computer-implemented method for generating at least one logistics configuration for a production facility, a plurality of KPIs is received. The generative design algorithm comprises a Pareto-front analysis with respect to the plurality of KPIs. That is, a Pareto optimum may be determined where no KPI can be improved without making at least one other KPI worse off.

According to an embodiment of the computer-implemented method for generating at least one logistics configuration for a production facility, the initial logistics configuration for the production facility is a current configuration of the logistics configuration for the production facility. Also, there may be a prior step of determining the closest logistics configuration for the production facility that is previously been implemented. Herein, a human operator may determine based on knowledge and experience which of the logistics configurations is the "closest" in the present case.

According to an embodiment of the computer-implemented method for generating at least one logistics configuration for a production facility, the initial logistics configuration for the production facility is randomly selected within predetermined constraints. For example, a set of predefined logistics configurations for the production facility may be provided and the initial logistics configuration for the production facility is selected by choice from this set of predefined logistics configurations.

According to an embodiment of the computer-implemented method for generating at least one logistics configuration for a production facility, the step of generating with a generative design algorithm at least one possible logistics configuration for the production facility is repeated for different initial logistics configuration for the production facility. Amongst all solutions, the best generated possible logistics configuration can be selected. Herein, the "best" logistics configuration may be determined based on the KPIs.

The step of generating with a generative design algorithm at least one possible logistics configuration for the production facility may also be repeated for the same initial logistics configuration for the production facility. In case of nondeterministic algorithm, other (and possibly better) solutions may be found.

According to an embodiment of the computer-implemented method for generating at least one logistics configuration for a production facility, the generative design algorithm stops if a predetermined stopping criterion is met. The stopping criterion may be that an acceptable solution is found, no significant progress is made, or the computation time or effort surpasses predefined limits.

The invention also provides a computer program comprising executable program code configured to, when executed (e.g. by a computing device), perform the method according to the first aspect of the invention.

The invention also provides a non-transitory computer-readable data storage medium comprising executable program code configured to, when executed (e.g. by a computing device), perform the method according to the first aspect of the invention.

The invention also provides a data stream comprising (or configured to generate) executable program code configured to, when executed (e.g. by a computing device), perform the method according to the first aspect of the invention.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts. It should be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.
- Fig. 1: schematically shows a block diagram illustrating a device for generating at least one logistics configuration for a production facility, according to an embodiment of the invention;
- Fig. 2: schematically shows a production facility with a plurality of logistics components;
- Fig. 3: shows a flow diagram of a computer-implemented method for generating at least one logistics configuration for a production facility according to an embodiment of the invention;
- Fig. 4: schematically illustrates a block diagram illustrating a computer program product according to an embodiment of the invention; and
- Fig. 5: schematically illustrates a block diagram illustrating a non-transitory, computer-readable storage medium according to an embodiment of the invention.

### Detailed description of the invention

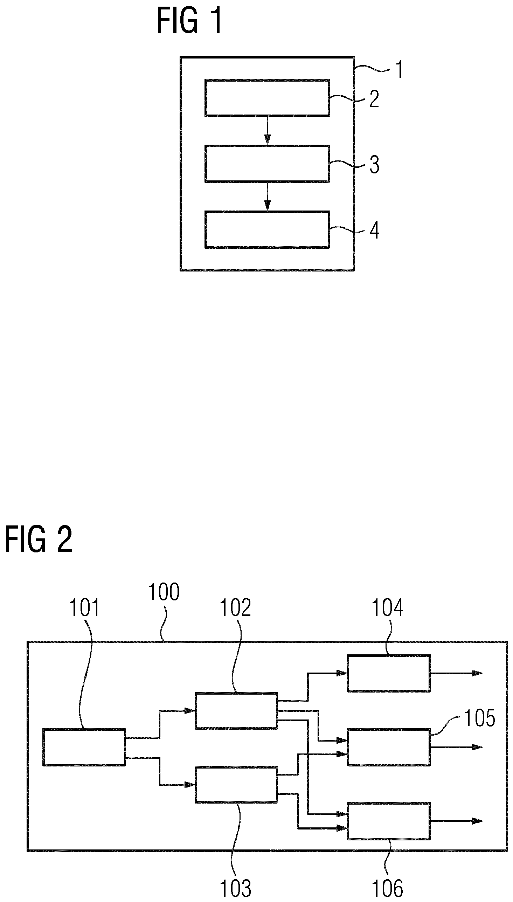

Figure 1 schematically shows a block diagram illustrating a device 1 for generating at least one logistics configuration for a production facility.

The device 1 comprises an input interface 2. The input interface 2 may comprise a human-machine interface such that a human operator can provide information and commands. The input interface 2 may also establish communication over a wireless or wired communication channel with external devices, e.g. a server that provides information and commands. The information and commands provided to the device 1 comprises at least one key performance indicator, KPI, that indicates production goals of the production facility.

The input interface 2 may provide a plurality of KPIs. The human operator may possibly select a subset of the KPIs and may determine specific values or ranges for each of the KPIs or the selected subset of KPIs. The KPIs may comprise a throughput of materials and/or products within the production facility. The KPIs may also relate to costs of products produced in the production facility or total costs of a production process carried out in the production facility. The KPIs may further relate to a number of materials and/or products handled within the production facility in a given time period, and/or to a robustness measure of production in the event of failures of at least one logistics component of the production facility.

The device 1 further comprises a computation unit 3 with hardware and software components. The hardware components may comprise at least one of microcontrollers, central processing units (CPU), memories and storage devices.

The computation unit 3 generates with a generative design algorithm at least one possible logistics configuration for the production facility. Herein, the generative design algorithm starts from an initial logistics configuration for the production facility. The initial logistics configuration for the production facility can be randomly selected (possibly within predetermined constraints).

Initial logistics configurations for the production facility may also be provided via the input interface 2. For example, the operator may select one initial logistics configuration for the production facility out of a plurality of predefined initial logistics configurations for the production facility.

The generative design algorithm comprises an optimization based on the received at least one KPI. The optimization may be carried out based on at least one constraint for the logistics configuration for the production facility. The at least one constraint is taken into account in generating the at least one possible logistics configuration for the production facility. At least one constraint may be predetermined. Additionally, or alternatively, at least one constraint may be selected or set using the input interface 2 of the device 1. The constraint may comprise types and/or numbers of logistics components of the production facility.

The generative design algorithm may include a flow-based algorithm, such as a Ford-Fulkerson algorithm. Logistics configuration for the production facility may comprise a determination of flow rates of materials and/or products within the production facility.

If a predetermined stopping criterion is met, the generative design algorithm stops. An output is provided via an output interface 4 of the device 1 for generating at least one logistics configuration for the production facility. The output interface 4 and the input interface 2 may be implemented in a single physical component.

For example, the input interface 2 may comprise a keyboard, touchscreen, buttons and the like. The output interface 4 may comprise a monitor. The output provided via the output interface 4 may comprise specific values of the KPIs achieved by the obtained solution of the logistics configuration for the production facility. The output may further comprise details about the logistics configuration, e.g. a number of logistics components of the production facility, types of logistics components of the production facility, and the like.

A human operator may review the provided at least one generated possible logistics configuration for the production facility. After reviewing, the human operator may adjust at least one parameter comprising at least one of the KPIs, the initial logistics configuration for the production facility, and the constraints for the logistics configuration for the production facility.

The device 1 may receives from the human operator via the input interface 2 a signal indicating updates of the at least one parameter. The generative design algorithm provides at least one further possible logistics configuration based on the updated at least one parameter.

The process of generating the at least one possible logistics configuration for the production facility may automatically be repeated. Moreover, different sets or ranges with regard to the at least one parameter may be provided in advance. The generative design algorithm determines the at least one possible logistics configuration for all possible combinations of parameters or for a subset of parameters out of the set of all possible combinations of parameters.

The output interface 4 may also comprise a wired or wireless link to further external devices, such as a server.

The output provided by the output interface 4 may also comprise specific control commands determined based on the generated possible logistics configuration for the production facility. The control commands can be used to directly control the logistics components according to the found solution.

For example, configurations of a transportation system of the production facility can be changed based on the generated possible logistics configuration for the production facility. Logistics components may be added to a transportation system of the production facility, logistics components may be removed from the transportation system or capacity of the logistics components of the transportation system can be adjusted.

Figure 2 schematically shows a production facility 100 with a plurality of logistics components 101 to 106. The arrows between the different components indicate possible flow between the respective logistics components 101 to 106. The logistics components 101 to 106 may comprise robots, conveyor belts, vehicles (such as forklifts), electronic items, sensors, actuators, RFID tags, and the like.

The production facility may comprise a logistics component 101 at an initial location of the production process and may comprise several logistics components 104 to 106 at end locations of the production process that provide the final products and materials.

The invention is not restricted to the described configuration. The production facility may comprise a plurality of logistics components at initial locations. Further, at least some of the logistics components may be completely decoupled from each other, that is do not influence each other.

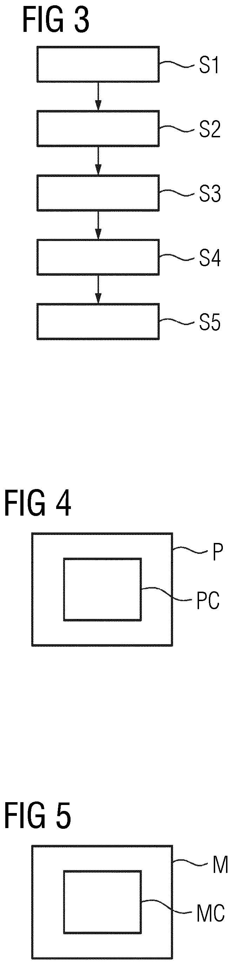

Figure 3 shows a flow diagram of a computer-implemented method for generating at least one logistics configuration for a production facility 100. The method may be carried out with a device 1 for generating at least one logistics configuration for the production facility 100 as described above. In turn, the device 1 for generating at least one logistics configuration for the production facility 100 may be configured to carry out any of the following method steps.

The method algorithmically finds a solution for logistics and transportation needs for the given production facility 100 with a known order list, using generative design methods.

In a first method step S1, at least one constraint for the logistics configuration for the production facility 100 is determined. The at least one constraint may be determined using an input interface 2, e.g. by an operator of the device 1. The constraint may relate to types and amount of logistics components to be used.

In a second method step S2, at least one key performance indicator, KPI, is received. The at least one KPI describes production goals of the production facility 100. A weighting of the KPIs can be used to generate a single target value (utility function). For example, flow-based algorithm such as Ford-Fulkerson algorithms can be used to determine maximum flow rates or simulative methods can be used to determine robustness of the solution found in case of individual equipment failures.

In a third method step S3, the initial logistics configuration for the production facility 100 is determined. The initial logistics configuration may be selected by an operator via the input interface 2 out of a set of initial logistics configurations.

The operator may also determine specific values for each parameters describing the initial logistics configuration for the production facility 100. The initial logistics configuration can also be the current configuration of the production facility, a configuration set up by a domain expert or a randomly chosen starting configuration.

Steps S1 to S3 relate to a setup and initialization of the method.

In a fourth method step S4, a generative design algorithm generates at least one possible logistics configuration for the production facility 100. The generative design algorithm starts from an initial logistics configuration for the production facility 100. The generative design algorithm comprises an optimization that is based on the received at least one KPI.

The generative design algorithm generates new candidate solutions by using operations from an allowed operation set to change the logistics components. Allowed operations may include adding or removing logistics components (such as conveyors and robots) or change the capacity of existing logistics components. For efficiency, only operations may be selected that yield logistics configuration that are allowed according to the constraints defined in step S1.

The computed at least one logistics configuration for the production facility are evaluated with respect to the defined KPIs to determine which candidates may be further refined or sorted out.

The method is repeated until a stopping criterion is met. For example, an acceptable solution may be found, no significant process is made or the computation time or effort surpasses predefined limits.

In a fifth method step S5, the at least one generated possible logistics configuration for the production facility 100 is provided as an output. A human operator may reveal the most promising solution candidates amongst the generated possible logistics configurations. The human operator may possibly adjust one of the generated possible logistics configuration and use said (possibly adjusted) logistics configuration for the operation of the production facility 100. The human operator may also restart the process with fine-tuned constraints.

Figure 4 schematically illustrates a block diagram illustrating the computer program product P comprising executable program code PC. The executable program code PC is configured to perform, when executed (e.g. by a computing unit), the method for generating at least one logistics configuration for production facility described above.

Figure 5 schematically illustrates a block diagram illustrating a non-transitory, computer-readable storage medium M comprising executable program code MC configured to, when executed (e.g. by a computing unit), perform the method for generating at least one logistics configuration for production facility described above.

It should be understood that all advantageous options, variance in modifications described herein and the foregoing with respect to embodiments of the device according to the second aspect may be equally applied to embodiments of the method according to the first aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

## Claims

1. A computer-implemented method for generating at least one logistics configuration for a production facility (100), wherein the logistics configuration for the production facility (100) determines flow of materials and/or products within the production facility (100), the method comprising the following steps:
receiving (S2) at least one key performance indicator, KPI, that describes production goals of the production facility (100) ;
generating (S4) with a generative design algorithm at least one possible logistics configuration for the production facility (100), starting from an initial logistics configuration for the production facility (100), wherein the generative design algorithm comprises an optimization that is based on the received at least one KPI; and
outputting (S5) the at least one generated possible logistics configuration for the production facility (100).

2. The method according to claim 1, further comprising the step of receiving (S1) at least one constraint for the logistics configuration for the production facility (100), wherein the at least one constraint is taken into account in the step of generating the at least one possible logistics configuration for the production facility (100).

3. The method according to claim 2, wherein the at least one constraint comprises types and/or numbers of logistics components (101-105) of the production facility (100).

4. The method according to any of the preceding claims, wherein the generative design algorithm includes a flow-based algorithm, in particular a Ford-Fulkerson algorithm for determining flow rates of materials and/or products within the production facility (100).

5. The method according to any of the preceding claims, wherein the step of generating the at least one possible logistics configuration involves changing configurations of a transportation system of the production facility (100).

6. The method according to claim 5, wherein changing configurations of the transportation system of the production facility (100) includes at least one of adding logistics components (101-105) to the transportation system, removing logistics components (101-105) from the transportation system and changing capacities of logistics components (101-105) of the transportation system.

7. The method according to any of the preceding claims, further comprising the step of receiving a signal indicating updates of at least one parameter, wherein the at least one parameter comprises at least one of the at least one KPI and the at least one constraint, and wherein the step of generating at least one possible logistics configuration for the production facility (100) is repeated based on the updated parameters.

8. The method according to any of the preceding claims, wherein the at least one KPI includes at least one of:
- a throughput of materials and/or products within the production facility (100),
- costs of at least one product produced in the production facility,
- total costs of a production process carried out in the production facility (100),
- a number of materials and/or products handled within the production facility (100) in a given time period, and
- a robustness measure of production in the event of failures of at least one logistics component (101-105) of the production facility (100).

9. The method according to any of the preceding claims, wherein a plurality of KPIs is received, and wherein the generative design algorithm comprises
- an optimization of a utility function that is given by a weighting of the plurality of KPIs, or
- a Pareto-front analysis with respect to the plurality of KPIs.

10. The method according to any of the preceding claims, wherein the initial logistics configuration for the production facility (100) is
- a current configuration of the logistics configuration for the production facility (100), or
- randomly selected within predetermined constraints.

11. The method according to any of the preceding claims, wherein the step of generating (S4) with a generative design algorithm at least one possible logistics configuration for the production facility is repeated for different initial logistics configuration for the production facility (100).

12. The method according to any of the preceding claims, wherein the generative design algorithm stops if a predetermined stopping criterion is met.

13. A device (1) for generating at least one logistics configuration for a production facility (100), wherein the logistics configuration for the production facility (100) determines flow of materials and/or products within the production facility (100), the device (1) comprising:
an input interface (2) configured to receive at least one key performance indicator, KPI, that describes production goals of the production facility (100);
a computation unit (3) configured to generate with a generative design algorithm at least one possible logistics configuration for the production facility (100), starting from an initial logistics configuration for the production facility (100), wherein the generative design algorithm comprises an optimization that is based on the received at least one KPI; and
an output interface (4) adapted to output the at least one generated possible logistics configuration for the production facility (100).

14. Computer program product (P) comprising executable program code (PC) configured to, when executed by a computing device, perform the method according to any of claims 1 to 12.

15. Non-transitory, computer-readable storage medium (M) comprising executable program code (MC) configured to, when executed by a computing device, perform the method according to any of claims 1 to 12.
